Europäisches Patentamt

European Patent Office

Office européen des brevets

(11) Publication number: **0 150 515**
A1

## (12) EUROPEAN PATENT APPLICATION

(21) Application number: **84200051.5**

(22) Date of filing: **13.01.84**

(51) Int. Cl.⁴: **F 04 D 7/06,** F 04 D 13/08, G 21 C 15/24

(43) Date of publication of application: **07.08.85**
Bulletin 85/32

(71) Applicant: **B.V. Neratoom, Laan van Nieuw Oost Indie 129-135, NL-2593 BM 's-Gravenhage (NL)**

(72) Inventor: **Keiholz, Christoph Eduard, Am Milchbornberg 32, D-5060 Bergisch Gladbach (DE)**

(74) Representative: **Urbanus, Henricus Maria, Ir. et al, c/o Vereenigde Octrooibureaux Nieuwe Parklaan 107, NL-2587 BP 's-Gravenhage (NL)**

(84) Designated Contracting States: **BE DE FR GB IT NL**

(54) Pump for circulating a cooling fluid consisting of a liquid metal in a cooling circuit of a nuclear reactor.

㉗ The pump comprises a casing (2), a drive motor (4) disposed above the casing, a pump shaft (3) extending vertically into the casing, and a pump impeller (14) connected to the pump shaft and arranged in the bottom part of the casing. At least one supply duct (13) and at least one discharge duct (20) for cooling fluid terminate in the casing adjacent the pump impeller (14). According to the invention, a given coolant level (22) is maintained above the pump impeller in the casing by means of an inducer impeller (15) connected to the pump impeller (14) and by means of substantially vertical bores (21) through the pump impeller.

ACTORUM AG

0150515

Title: Pump for circulating a cooling fluid consisting
of a liquid metal in a cooling circuit of a nuclear
reactor.

This invention relates to a pump for circulating
a cooling fluid consisting of a liquid metal in the cooling
circuit of a nuclear reactor, comprising a casing, a drive
motor disposed above said casing, a relatively long pump
shaft vertically extending into said casing, and a pump
impeller arranged in the bottom part of said casing and
connected to said pump shaft, and provided with at least
one supply duct and at least one discharge duct for the
cooling fluid, terminating in said casing adjacent said
pump impeller, and including means for maintaining a given
coolant level above the pump impeller in the casing.

A pump of this type is generally known and is
described in the literature dealing with, for example,
sodium-cooled nuclear reactors. In such a pump, a layer
of liquid metal is maintained in the casing above the pump
impeller, while often a gas blanket is maintained above
the liquid metal layer. The level of the liquid metal layer
is commonly selected to be equal to the level of the liquid
metal in the reactor vessel proper. In order that the liquid
levels may be maintained at the same height, the prior
pumps are commonly provided with an overflow duct communicating with the reactor vessel. One disadvantage of this
construction is that this requires at least one outlet
in the wall of the pump casing and in the wall of the
reactor vessel, while further additional ducts are required.
A further drawback is that, in case the pump is placed
in the cold leg, this solution is impossible. The only
possibility then offered is the return of the overflowing
cooling fluid to the intake duct of the pump. There is
then the danger, however, that the pump plenum is fully
emptied, whereafter gas may enter the main ducts, which
is a hazard to the reactor core.

0150515

It is an object of the present invention to provide a pump in which the problems outlined above do not present themselves. Specifically, it is an object of the invention to provide a pump which, if so desired, may be disposed in the so-called cold leg of the circuit without overflow ducts being required.

The purpose contemplated is achieved, according to the invention, with a pump in which the means for maintaining a given coolant level above the pump impeller include an inducer impeller connected to the pump impeller, and substantially vertical bores through the pump impeller.

In a pump of the type defined in the opening paragraph hereof, the pressure above the pump impeller equals the pressure of the gas above the liquid metal layer plus the pressure of the liquid column. In a pump with an inducer impeller, the pressure between the inducer impeller and the pump impeller, the so-called inducer pressure equals the pressure at the suction side plus the pressure head of the inducer propeller. If, in all running conditions, the inducer pressure exceeds the pressure of the gas above the layer of liquid metal, no gas can be drawn in. As the gas plenum in the pump is connected to the cover gas in the reactor vessel, the gas pressure in the pump is determined by the pressure in the reactor vessel. Accordingly, the pressure equilibrium at the overflow bores can only be determined by a suitable selection of the inducer pressure and the diameter and the number of the overflow holes. Consequently, an overflow duct for the discharge of superfluous liquid metal can be dispensed with. Superfluous liquid metal is returned by the geodetic pressure head of the liquid metal column above the pump impeller. The pressure loss across the overflow holes is determined by the amount of liquid metal to be returned, which, in turn, is determined by the leakage losses for one thing owing to the supply of the hydrostatic bearings provided.

In practice it has been found, in accordance with the present invention, that, with a pump impeller having a diameter of ca 100 cm an acceptable level of the liquid metal above the impeller can be maintained, if a dozen bores with a diameter of 5 cm are used in the vicinity of the pump shaft. It is preferable to use bores not too far from the pump shaft, so that the bores terminate in the space between the blades of the pump impeller and the blades of the inducer impeller. This offers the best solution from a structural point of view. It is noted that, if necessary, it would be sufficient to omit the inducer impeller, in which case the bores must be made in the impeller blades so as to be well-spaced from the pump shaft to maintain an acceptable column of liquid metal above the pump impeller.

It is further noted that pumps have been described with bores of very small diameter in the pump impeller. In these prior pumps, such bores are intended to reduce the pressure on the back of the impeller, by virtue of which bearing loads can be reduced. There is no question of maintaining a substantial liquid column above the pump impeller in such pumps.

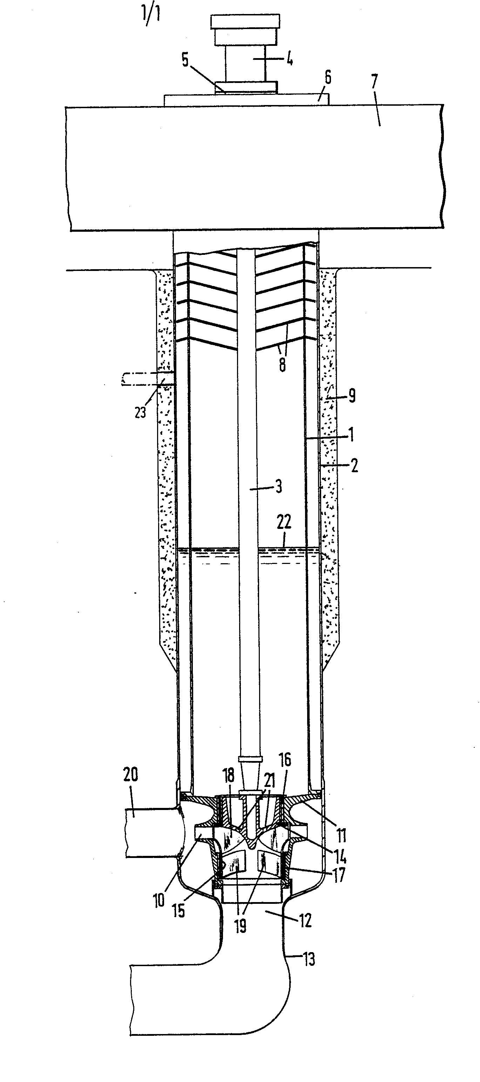

The invention will be described with reference to the accompanying drawing, which in a single figure, shows a cross-sectional view of one embodiment of the pump according to the invention.

The pump shown in the figure comprises an inner pump casing 1 arranged within an outer casing 2 so as to be bodily removable with the pump proper. Extending into casing 1 is a pump shaft 3, coupled at the top to a motor 4. Motor 4 is arranged above a pump cover 6, and a gasket 5 provides for a sealed passage of the pump shaft 3 through the pump cover 6.

The pump casing 2 is, at the top, for example supported by, and passed through a concrete floor 7. Secured around the pump shaft, in the top part of pump housing 2, are known screens 8 serving to hold back heat and radiation.

In the space under concrete floor 7, an insulating layer 9 may be provided around pump casing 2.

Secured in the bottom part of the inner casing 1 is an impeller guide 11, which is provided along its circumference with outlet stubs 10, and is suitably supported on the bottom of casing 2. Impeller guide 11 is open at the bottom, and connects with a supply opening 12 in the bottom of casing 12, to which a supply duct 13 is connected.

Secured to the lower end of pump shaft 3 are pump impeller 14 and inducer impeller 15, which is fixedly coupled thereto. The pump impeller/inducer combination 14/15 is journalled in impeller guide 11 by means of hydrostatic bearings 16 and 17. The blades of the pump impeller 14 are designated by 18, and the blades of inducer impeller 15 by 19. Provided in the sidewall of pump housing 2 is an outlet, to which a discharge duct 20 is coupled. Provided in pump impeller 14 are bores 21, which connect the space in the inner pump casing 1 to the space between the blades 18 of pump impeller 14 and the blades 19 of inducer impeller 15. Provided in casing 2 in the gas space is an aperture 23, which is connected to the reactor vessel by means of a conduit.

In operation, liquid metal, for example, liquid sodium, which is circulated as a coolant in a cooling circuit is "sucked", or drawn by the pump according to the invention from duct 13. Via opening 12 the coolant enters the space between the blades 18 and blades 19 of pump impeller 14 and inducer impeller 15, respectively. Owing to the operation of these impellers, the liquid is forced by the diffuser blades 10 in the circumference of impeller guide 11 into conduit 20. Liquid metal also ascends between the inner wall of impeller guide 11 and the outer wall of pump impeller 14, where the liquid provides the hydrostatic bearing 16 with liquid. In this way an amount of liquid metal comes to stand above pump impeller 14. The height of the liquid level 22 is determined by the pump pressure and the counterpressure exerted by a gas blanket present above the liquid metal, and by the presence of bores 21. If bores 21 were not present, the level 22 of the liquid metal would rise to an impermissible height, and an overflow duct would be necessary. The inducer pressure provided by inducer impeller 15 is necessary to prevent the liquid metal above the impeller (level 22) to sink to such an extent that gas would be drawn in through the overflow holes 21.

C L A I M S
----------

1.    A pump for circulating a cooling fluid consisting of a liquid metal in the cooling circuit of a nuclear reactor, comprising a casing, a drive motor disposed above said casing, a relatively long pump shaft vertically extending into said casing, and a pump impeller arranged in the bottom part of said casing and connected to said pump shaft, and provided with at least one supply duct and at least one discharge duct for the cooling fluid, terminating in said casing adjacent said pump impeller, and including means for maintaining a given coolant level above the pump impeller in the casing, characterized in that the means for maintaining a given coolant level above the pump impeller include an inducer impeller connected to the pump impeller, and substantially vertical bores through the pump impeller.

2.    A pump according to claim 1, characterized in that the bores terminate in the space between the blades of the pump impeller and the blades of the inducer impeller.

0150515

1/1

European Patent
Office

**EUROPEAN SEARCH REPORT**

0150515
Application number

EP 84 20 0051

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 452 616 (KSB)<br>* Page 1; page 3, lines 6-10; figure 6 * | 1,2 | F 04 D 7/06<br>F 04 D 13/08<br>G 21 C 15/24 |
| E | NL-A-8 202 892 (NERATOOM)<br>* Whole document * | 1,2 | |
| X | FR-A-2 474 744 (ELECTRICITE DE FRANCE)<br>* Pages 4-5; figure 2 * | 1,2 | |
| | | | **TECHNICAL FIELDS SEARCHED (Int. Cl. 3)**<br><br>F 04 D<br>G 21 C |

The present search report has been drawn up for all claims

| Place of search | Date of completion of the search | Examiner |
|---|---|---|
| THE HAGUE | 29-08-1984 | DE SCHEPPER H.P.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82